(19) Europäisches Patentamt
European Patent Office
Office européen des brevets

(11) **EP 4 779 592 A1**

(12) **EUROPEAN PATENT APPLICATION**
published in accordance with Art. 153(4) EPC

(43) Date of publication:
**22.07.2026  Bulletin 2026/30**

(21) Application number: **24864178.9**

(22) Date of filing: **24.06.2024**

(51) International Patent Classification (IPC):
**G06V 20/58** (2022.01)

(52) Cooperative Patent Classification (CPC):
Y02T 10/40

(86) International application number:
**PCT/CN2024/100898**

(87) International publication number:
**WO 2025/055453 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.09.2023  CN 202311186786**

(71) Applicant: **Dongfeng Motor Group Co., Ltd.**
**Wuhan, Hubei 430056 (CN)**

(72) Inventors:
• **WEN, Yi**
**Wuhan, Hubei 430056 (CN)**

• **LI, Yanyang**
**Wuhan, Hubei 430056 (CN)**
• **YANG, Shihui**
**Wuhan, Hubei 430056 (CN)**
• **DU, Shaoxuan**
**Wuhan, Hubei 430056 (CN)**
• **FANG, Qiang**
**Wuhan, Hubei 430056 (CN)**

(74) Representative: **Valet Patent Services Limited**
**c/o Caya 83713X**
**Am Börstig 5**
**96052 Bamberg (DE)**

(54) **METHOD FOR RECOGNIZING PEDESTRIANS ON PEDESTRIAN CROSSWALK**

(57)    The invention discloses a method for recognizing a pedestrian on a crosswalk. In the method, a front-facing camera of a vehicle is used to acquire an image corresponding to a scene in front of the vehicle, color blocks in the image are acquired and screened, then regression lines of the color blocks are acquired. The regression lines in the image are screened and numbered by using a characteristic that longitudinal boundary lines of white color blocks of the crosswalk intersect at a point in the image of the front-facing camera. Successfully screened regression lines are the longitudinal boundary lines of the white color blocks of the crosswalk. A variation in numbering of the regression lines during a detection process reflects a situation of occlusion of the white color blocks of the crosswalk by a pedestrian, thereby achieving a recognition of a pedestrian on the crosswalk.

FIG. 2

EP 4 779 592 A1

**Description**

CROSS-REFERENCE TO RELATED APPLICATION

Embodiments of this application are based on a Chinese patent application No. 202311186786.6, filed on September 14, 2023 and the priority of this Chinese patent application is claimed, and the entire content of the Chinese patent application is hereby incorporated into this application as a reference.

TECHNICAL FIELD

The invention relates to a field of driving image processing technology, and specifically to a method for recognizing a pedestrian on a crosswalk.

BACKGROUND

The invention relates to a field of vehicle perception and detection technology, and specifically refers to an application and implementation of a method for recognizing and deducing a pedestrian on a crosswalk. Currently, related autonomous driving systems are generally equipped with a millimeter-wave radar and an Advanced Driver Assistance System (ADAS) dedicated camera (with a built-in intelligent driving vision chip) during product development to meet a demand for vehicle intelligent driving. However, costs of the millimeter-wave radar and the ADAS-dedicated camera are both relatively high, and the millimeter-wave radar and the ADAS-dedicated camera are generally mostly used for advanced and comfort functions such as Adaptive Cruise Control (ACC), traffic jam assist (TJA), etc. If a millimeter-wave radar or an ADAS-dedicated camera is additionally installed on a vehicle model which only requires a low-end function such as an Autonomous Emergency Braking (AEB) system, additional costs will be incurred.

SUMMARY

An object of the invention is to provide a method for recognizing a pedestrian on a crosswalk to use a front-facing camera of a vehicle for pedestrian recognition, thereby reducing a hardware cost incurred in vehicle development to meet a portion of auxiliary driving functions.
To solve the above technical problem, a technical solution provided by the invention is: a method for recognizing a pedestrian on a crosswalk, applied in an electronic device of a vehicle,

key feature points of a color block in an obtained image are recognized through a calibrated front-facing camera it is expanded, with the key feature points as a center, outward by a certain range, and an expanded range is taken as a preliminary candidate range for the color block. The key feature points comprise a corner point and a boundary point of the color block;
recognizing, in the preliminary candidate range of the color block, points having adjacent features, forming several sets, and screening the sets according to pixel lengths of all the sets;
determining that boundary lines of color blocks in the crosswalk intersect at a vanishing point in the image acquired by the front-facing camera;
acquiring regression lines of screened sets, grouping pairwise all regression lines to form several coarse judgment groups, and determining whether regression lines of each coarse judgment group meet a vanishing point coarse judgment requirement according to two-dimensional coordinates, within an image plane, of regression points on the regression lines of each coarse judgment group and an intersection point of the two regression lines of each coarse judgment group;
grouping pairwise coarse judgment groups that meet the vanishing point coarse judgment requirement, to form a plurality of fine judgment groups, and determining whether each fine judgment group meets a vanishing point fine judgment requirement according to spherical coordinates of an intersection point of the regression lines of each fine judgment group;
numbering the regression lines that meet the fine judgment requirement;
determining whether a pedestrian exists on a front crosswalk according to a variation in numbering of the regression lines when real-time detection.

As a second aspect, the invention further provides a vehicle active braking method, which uses the above-mentioned method for recognizing a pedestrian on a crosswalk for pedestria recognition, and when a pedestrian is recognized and a speed of the vehicle is greater than a certain threshold, the vehicle performs an active braking.
As a third aspect, the invention further provides a system for recognizing a pedestrian on a crosswalk, which is used for executing the above-mentioned method for recognizing a pedestrian on a crosswalk, the system comprises:

> a front-facing camera used for acquiring a corresponding image of a scene in front of the vehicle;
> a pedestrian detection module, used for recognizing a pedestrian on a crosswalk in the scene in front of the vehicle according to a calibration result of the front-facing camera and the image obtained by the front-facing camera.

As a fourth aspect, the invention further provides a vehicle, comprising the above-mentioned system for recognizing a pedestrian on a crosswalk.

A beneficial effect of the invention is: in a recognition stage of the method, according to a characteristic of consistent actual sizes of white color blocks in the crosswalk, the sets of points are preliminarily screened through lengths of the color blocks; then, according to a characteristic that longitudinal boundaries of white color blocks in the crosswalk are parallel to each other, a vanishing point is defined and the vanishing point coarse judgment requirement and the vanishing point fine judgment requirement are defined to screen the regression lines of the sets, and the regression lines obtained after being screened are the longitudinal boundary lines of the white color blocks in the crosswalk; by numbering the screened regression lines, a situation of occlusion of the white color blocks in the crosswalk by a pedestrian in the image can be reflected by a variation in numbering, thereby recognizing the pedestrian. The method only uses the front-facing camera, which will be equipped on low-end vehicle models, for image acquisition; compared with a solution in the related art which uses a millimeter-wave radar and an ADAS-dedicated camera for pedestrian recognition, the method greatly reduces a hardware cost.

BRIEF DESCRIPTION OF DRAWINGS

FIG. 1 is a schematic diagram of a test scene for camera calibration used in the related art;
FIG. 2 is a schematic flow chart of a method for recognizing a pedestrian on a crosswalk according to Embodiment 1 of the invention;
FIG. 3 is an image acquired by a front-facing camera in a test scene during a calibration stage of the method for recognizing a pedestrian on a crosswalk according to Embodiment 1 of the invention;
FIG. 4 is a preliminarily processed diagram of a real-scene image according to the method for recognizing the pedestrian on the crosswalk according to Embodiment 1 of the invention; and
FIG. 5 is a deeply processed diagram of a real-scene image according to the method for recognizing the pedestrian on the crosswalk according to Embodiment 1 of the invention.

DETAILED DESCRIPTION

To make purposes, technical solutions, and advantages of embodiments of the invention clearer, the technical solutions of the embodiments of the invention will be described clearly and completely below in conjunction with the accompanying drawings of the embodiments of the invention. Obviously, the described embodiments are part of the embodiments of the invention, not all of the embodiments. Based on the described embodiments of the invention, all other embodiments obtained by those of ordinary skill in the art without creative effort fall within the scope of protection of the invention.

Embodiment 1:

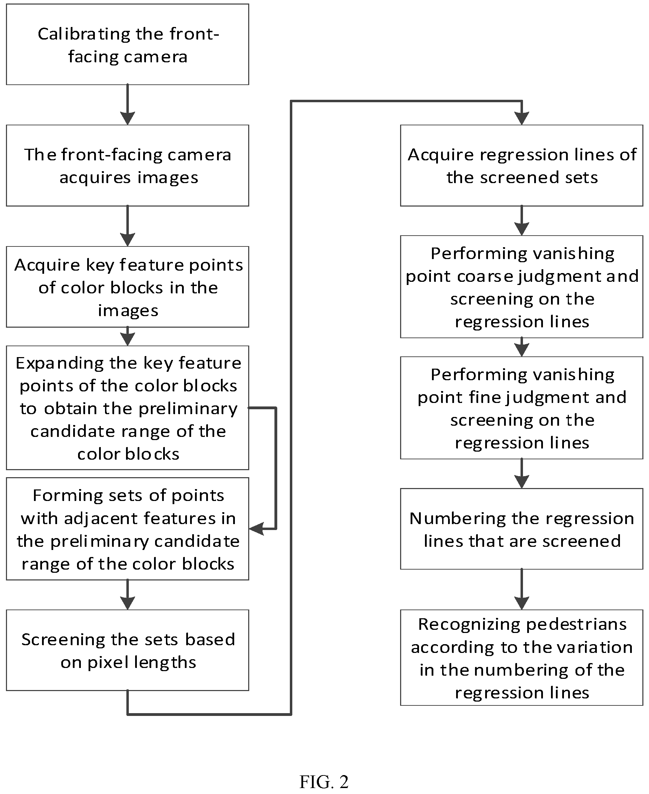

Referring to FIG. 2, a method for recognizing a pedestrian on a crosswalk, the method comprises a calibration stage and a recognition stage.

In the calibration stage, a transformation relationship between pixel coordinates of an image acquired by a front-facing camera on a vehicle and actual three-dimensional coordinates of a scene in front of the vehicle is established according to extrinsic parameters and intrinsic parameters of the front-facing camera on the vehicle; then, the vehicle is placed in a test scene, and the front-facing camera is calibrated by determining pixel coordinates of a test pattern in the test scene in the image acquired by the front-facing camera and actual three-dimensional coordinates of the test pattern in the test scene.

The recognition stage comprises the following steps that:

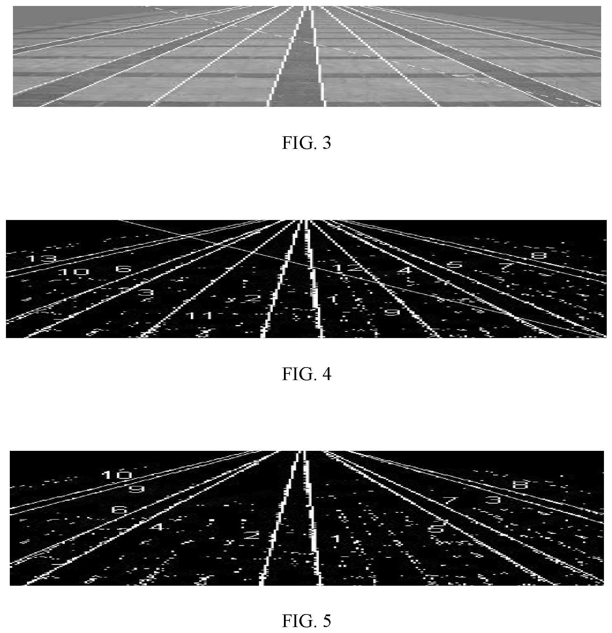

> key feature points of a color block in the acquired image are recognized by the front-facing camera (an acquired original image undergoes a simple grayscale processing and a feathering edge processing, a processed image being shown in FIG. 4, such that key feature points can be reflected in the color block in the processed image), it is expanded outward by a certain range with the key feature points as a center, and an expanded range is taken as a preliminary candidate range for the color block (an obtained image is shown in FIG. 5, and image feature points screened by the preliminary candidate range are clear with less noise). The key feature points comprise a corner point and a boundary point;

in the preliminary candidate range of the color block, points having adjacent features are recognized and formed as several sets, and the sets are screened according to pixel lengths of each set, which is composed of points having adjacent features of, all the sets;

it is determined that boundary lines of color blocks in the crosswalk intersect at a vanishing point in the image acquired by the front-facing camera;

regression lines of screened sets are acquired; all regression lines are grouped pairwise to form several coarse judgment groups, and whether regression lines of each coarse judgment group meet a vanishing point coarse judgment requirement is determined according to two-dimensional coordinates, within an image plane, of regression points on the regression lines of each coarse judgment group and an intersection point of two regression lines of each coarse judgment group;

coarse judgment groups that meet the vanishing point coarse judgment requirement are grouped pairwise to form several fine judgment groups, and whether each fine judgment group meets a vanishing point fine judgment requirement is determined according to spherical coordinates of an intersection point of the regression lines of each fine judgment group;

the regression lines that meet the fine judgment requirement are numbered;

whether there is a pedestrian on a front crosswalk is determined according to a variation in numbering of the regression lines when real-time detection.

Further, in the calibration stage, a process of establishing the transformation relationship between pixel coordinates of the image acquired by the front-facing camera and actual three-dimensional coordinates of the scene in front of the vehicle is specifically as follows,

$[X\ Y\ Z]^T$ is let to be actual three-dimensional coordinates of the scene in front of the vehicle, $[u\ v]^T$ is let to be pixel coordinates of the image acquired by the front-facing camera, the transformation relationship between the two coordinates is as follows:

$$\rho\begin{bmatrix}u\\v\\1\end{bmatrix}=\begin{bmatrix}\frac{f}{dx}&0&u_0&0\\0&\frac{f}{dy}&v_0&0\\0&0&1&0\end{bmatrix}\begin{bmatrix}R&t\\0^T&1\end{bmatrix}\begin{bmatrix}X\\Y\\Z\\1\end{bmatrix}=\begin{bmatrix}m_{11}&m_{12}&m_{13}&m_{14}\\m_{21}&m_{22}&m_{23}&m_{24}\\m_{31}&m_{32}&m_{33}&m_{34}\end{bmatrix}\begin{bmatrix}X\\Y\\Z\\1\end{bmatrix}$$

where, $\rho$ is a constant, R, t are extrinsic parameters of the front-facing camera, f is a focal length of the front-facing camera, $(u_0, v_0)$ is a pixel coordinate of a point where an optical axis of the front-facing camera falls in the image, (dx, dy) is a resolution of the camera in X and Y directions; $m_{ij}$ is a constant, i = 1,2,3; j = 1,2,3,4;

R, t are coordinate transformation matrices corresponding to the vehicle, and a specific standard setting manner thereof is:

1) An i-th row of R represents coordinates, in a world coordinate system, of a unit vector in a direction of an i-th coordinate axis in a coordinate system of the front-facing camera;

2) An i-th column of R represents coordinates, in the coordinate system of the front-facing camera, of a direction of an i-th coordinate axis in the world coordinate system;

3) t represents coordinates, in the coordinate system of the front-facing camera, of an origin of the world coordinate system.

Since the method targets a crosswalk for recognition, the following formula is obtained by taking 0 for a Z direction:

$$\rho\begin{bmatrix}u\\v\\1\end{bmatrix}=\begin{bmatrix}m_{11}&m_{12}&m_{13}&m_{14}\\m_{21}&m_{22}&m_{23}&m_{24}\\m_{31}&m_{32}&m_{33}&m_{34}\end{bmatrix}\begin{bmatrix}X\\Y\\Z\\1\end{bmatrix}=\begin{bmatrix}m_{11}&m_{12}&m_{14}\\m_{21}&m_{22}&m_{24}\\m_{31}&m_{32}&m_{34}\end{bmatrix}\begin{bmatrix}X\\Y\\1\end{bmatrix}=M\begin{bmatrix}X\\Y\\1\end{bmatrix}$$

the above formula is further simplified to obtain:

$$\begin{cases} m_{11} \cdot X + m_{12} \cdot Y + m_{14} - u \cdot m_{31} \cdot X - u \cdot m_{32} \cdot Y = u \cdot m_{34} \\ m_{21} \cdot X + m_{22} \cdot Y + m_{24} - v \cdot m_{31} \cdot X - v \cdot m_{32} \cdot Y = v \cdot m_{34} \end{cases}°$$

Further, in the calibration stage, the test pattern comprises n key feature points, and through calibration, two-dimensional coordinates of each key feature point in the scene in front of the vehicle are obtained as $(X_k, Y_k)$, and pixel coordinates of each key feature point in the image are obtained as $(u_k, v_k)$; where k = 1,2,3,...., n; then:

$$\begin{bmatrix} X_1 & Y_1 & 1 & 0 & 0 & 0 & -u_1 \cdot X_1 & -u_1 \cdot Y_1 \\ 0 & 0 & 0 & X_1 & Y_1 & 1 & -v_1 \cdot X_1 & -v_1 \cdot Y_1 \\ \cdots & \cdots & \cdots & \cdots & \cdots & \cdots & \cdots & \cdots \\ X_n & Y_n & 1 & 0 & 0 & 0 & -u_n \cdot X_n & -u_n \cdot Y_n \\ 0 & 0 & 0 & X_n & Y_n & 1 & -v_n \cdot X_n & -v_n \cdot Y_n \end{bmatrix} \begin{bmatrix} m_{11} \\ m_{12} \\ m_{14} \\ m_{21} \\ m_{22} \\ m_{24} \\ m_{31} \\ m_{32} \end{bmatrix} = \begin{bmatrix} u_1 \cdot m_{34} \\ v_1 \cdot m_{34} \\ \cdots \\ u_n \cdot m_{34} \\ v_n \cdot m_{34} \end{bmatrix};$$

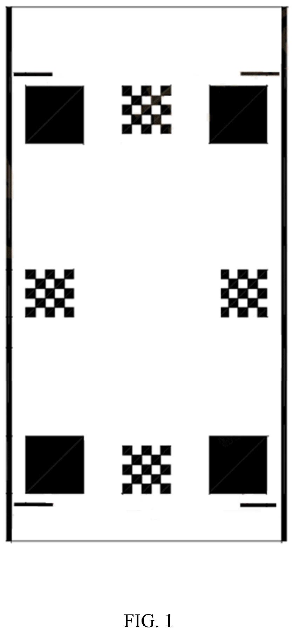

Referring to FIG. 1, a calibration of a camera in a related art solution consumes a large amount of time. Referring to FIG. 3, to achieve rapid calibration in this embodiment, test patterns of the ground form a grid form. During calibration, in the image acquired by the front-facing camera, horizontal lines forming the ground grid are made parallel to a bottom edge of the image of the front-facing camera, and correspondingly, the optical axis of the front-facing camera is made parallel to vertical lines of the ground grid, and then coordinates of calibration points on the ground are measured at one time.

FIG. 3 is a standard diagram in the test scene during the calibration stage. When the vehicle undergoes an offline inspection, calibration is performed through this diagram for writing correction parameters. Compared with a calibration process in the related art, in the calibration process of this embodiment, only the test pattern is different from that of the related art, and the rest calibration steps are consistent with those of the related art.

Further, a way of acquisition for the preliminary candidate range of the color block is specifically as follows, a key feature point in the color block is expressed by a vector representation method as $(p, \theta)$, then the preliminary candidate range is expressed as $(p_s, \theta_s)$, where $p_s = [p - \Delta p, p + \Delta p]$, $\theta_s = [\theta - \Delta\theta, \theta + \Delta\theta]$, $\Delta p$ and $\Delta\theta$ are given values of expanded ranges.

Further, the method for screening the sets according to the pixel lengths of all the sets is specifically that: a pixel length H of each set is acquired, and a mean value $\overline{L}$ of pixel length of all the sets is calculated, a pixel length evaluation value H' of all the sets is calculated, and a set with a pixel length evaluation value H' greater than its given threshold (a given threshold corresponding to H' in this embodiment is 25%) is retained; where $H' = \dfrac{H}{L}$.

Further, actual three-dimensional coordinates of an intersection point P of two regression lines in a same coarse judgment group in the scene in front of the vehicle are set as $(\overline{x}, \overline{y}, s)$. In the actual three-dimensional coordinate system, a Z axis is parallel to the optical axis of the front-facing camera, an X axis is horizontal, and a Y axis is vertical. s is a distance from the front-facing camera to a point where the optical axis of the front-facing camera falls.

regression points on two regression lines A, B in a certain coarse judgment group are let be $A_1(x_1, y_1)$, $A_2(x_2, y_2)$, $B_1(x_3, y_3)$, $B_2(x_4, y_4)$ respectively; t is defined as a coarse judgment coefficient, then:

$$\begin{cases} \overline{x} = \dfrac{1}{t} * [(x_2 - x_1) * (x_4 * y_3 - x_3 * y_4) - (x_4 - x_3) * (x_2 * y_1 - x_1 * y_2)] \\ \overline{y} = \dfrac{1}{t} * [(y_3 - y_4) * (x_2 * y_1 - x_1 * y_2) - (y_1 - y_2) * (x_4 * y_3 - x_3 * y_4)] \end{cases}$$

Then:

$$t = (y_2 - y_1) * (x_4 - x_3) - (y_4 - y_3) * (x_2 - x_1)$$

If t is less than its given threshold, it indicates that the regression lines A and B meet the vanishing point coarse judgment requirement.

Further, spherical coordinates of an intersection point P of the regression lines are let be $(\alpha, \beta)$, where $\alpha, \beta$ satisfy:

$$\alpha = \arctan\left(\frac{\overline{y}}{\overline{x}}\right)$$

$$\beta = \arctan\left(\frac{s}{\sqrt{\overline{x}^2+\overline{y}^2}}\right)$$

$\delta$ is defined as a fine judgment coefficient, and $\delta$ satisfies:

$$\delta = \arccos(\cos(90 - \beta_1)\cos(90 - \beta_2) + \sin(90 - \beta_1)\sin(90 - \beta_2)\cos(\alpha_1 - \alpha_2))$$

where $(\alpha_1, \beta_1), (\alpha_2, \beta_2)$ are spherical coordinates of an intersection point of the regression lines in a fine judgment group to be judged;
if $\delta$ is less than its judgment threshold, the regression lines in the corresponding fine judgment group meet the vanishing point fine judgment requirement.

A vehicle active braking method is provided, which uses the above-mentioned method for recognizing a pedestrian on a crosswalk for pedestrian recognition. When a pedestrian is recognized and a speed of the vehicle is greater than a certain threshold, the vehicle performs an active braking.

A system for recognizing a pedestrian on a crosswalk is used for executing the above-mentioned method for recognizing a pedestrian on a crosswalk. The system comprises:

a front-facing camera used for acquiring a corresponding image of a scene in front of the vehicle;
a pedestrian detection module, used for recognizing a pedestrian on a crosswalk in the scene in front of the vehicle according to a calibration result of the front-facing camera and the image obtained by the front-facing camera.

A vehicle comprises the above-mentioned system for recognizing a pedestrian on a crosswalk.

Embodiment 2:

A difference between this embodiment and Embodiment 1 lies in that, in the recognition stage, recognition is performed by comparing numbering of regression lines with a preset recognition. For example, if a variation in numbering of regression lines appears as 12356→1236→126 (occlusion type); or appears as 12456→12356→12346 (deviation type), it is determined that there is a pedestrian on a crosswalk in front of the vehicle.

The above are merely embodiments of the invention, which are not intended to limit a patent scope of the invention. All equivalent structures or equivalent process transformations made by using the specification and drawings of the invention, or direct or indirect applications in other related technical fields, are similarly included in the patent protection scope of the invention.

**Claims**

1. A method for recognizing a pedestrian on a crosswalk, applied in an electronic device of a vehicle, **characterized by** comprising:

recognizing key feature points of a color block in an obtained image through a calibrated front-facing camera, and expanding, with the key feature points as a center, outward by a certain range, an expanded range being taken as a preliminary candidate range for the color block, wherein the key feature points comprise a corner point and a boundary point of the color block;
recognizing, in the preliminary candidate range of the color block, points having adjacent features, forming several sets, and screening the sets according to pixel lengths of all the sets;

determining that boundary lines of color blocks in the crosswalk intersect at a vanishing point in the image acquired by the front-facing camera;

acquiring regression lines of screened sets, grouping pairwise all regression lines to form several coarse judgment groups, and determining whether regression lines of each coarse judgment group meet a vanishing point coarse judgment requirement according to two-dimensional coordinates, within an image plane, of regression points on the regression lines of each coarse judgment group and an intersection point of the two regression lines of each coarse judgment group;

grouping pairwise coarse judgment groups that meet the vanishing point coarse judgment requirement, to form a plurality of fine judgment groups, and determining whether each fine judgment group meets a vanishing point fine judgment requirement according to spherical coordinates of an intersection point of the regression lines of each fine judgment group;

numbering the regression lines that meet the fine judgment requirement;

determining whether there is a pedestrian on a front crosswalk according to a variation in numbering of the regression lines when real-time detection.

2. The method for recognizing the pedestrian on the crosswalk according to claim 1, wherein the front-facing camera is calibrated by: establishing a transformation relationship between pixel coordinates of an image acquired by the front-facing camera on a vehicle and actual three-dimensional coordinates of a scene in front of the vehicle according to extrinsic parameters and intrinsic parameters of the front-facing camera on the vehicle; then, placing the vehicle in a test scene, and calibrating the front-facing camera by determining pixel coordinates of a test pattern in the test scene in the image acquired by the front-facing camera and actual three-dimensional coordinates of the test pattern in the test scene.

3. The method for recognizing the pedestrian on the crosswalk according to claim 2, wherein a process of establishing the transformation relationship between pixel coordinates of the image acquired by the front-facing camera and actual three-dimensional coordinates of the scene in front of the vehicle comprises,

letting $[X\ Y\ Z]^T$ be actual three-dimensional coordinates of the scene in front of the vehicle, letting $[u\ v]^T$ be pixel coordinates of the image acquired by the front-facing camera, the transformation relationship between the two coordinates being:

$$\rho\begin{bmatrix}u\\v\\1\end{bmatrix}=\begin{bmatrix}\dfrac{f}{dx}&0&u_0&0\\[2mm]0&\dfrac{f}{dy}&v_0&0\\[2mm]0&0&1&0\end{bmatrix}\begin{bmatrix}R&t\\0^T&1\end{bmatrix}\begin{bmatrix}X\\Y\\Z\\1\end{bmatrix}=\begin{bmatrix}m_{11}&m_{12}&m_{13}&m_{14}\\m_{21}&m_{22}&m_{23}&m_{24}\\m_{31}&m_{32}&m_{33}&m_{34}\end{bmatrix}\begin{bmatrix}X\\Y\\Z\\1\end{bmatrix}$$

wherein, $\rho$ is a constant, R, t are extrinsic parameters of the front-facing camera, f is a focal length of the front-facing camera, $(u_0, v_0)$ is a pixel coordinate of a point where an optical axis of the front-facing camera falls in the image, (dx, dy) is a resolution of the camera in X and Y directions; $m_{ij}$ is a constant, i = 1,2,3; j = 1,2,3,4; since the method targets a crosswalk for recognition, obtaining, by taking 0 for a Z direction, a formula:

$$\rho\begin{bmatrix}u\\v\\1\end{bmatrix}=\begin{bmatrix}m_{11}&m_{12}&m_{13}&m_{14}\\m_{21}&m_{22}&m_{23}&m_{24}\\m_{31}&m_{32}&m_{33}&m_{34}\end{bmatrix}\begin{bmatrix}X\\Y\\Z\\1\end{bmatrix}=\begin{bmatrix}m_{11}&m_{12}&m_{14}\\m_{21}&m_{22}&m_{24}\\m_{31}&m_{32}&m_{34}\end{bmatrix}\begin{bmatrix}X\\Y\\1\end{bmatrix}=M\begin{bmatrix}X\\Y\\1\end{bmatrix}$$

further simplifying the formula to obtain:

$$\begin{cases}m_{11}\cdot X+m_{12}\cdot Y+m_{14}-u\cdot m_{31}\cdot X-u\cdot m_{32}\cdot Y=u\cdot m_{34}\\m_{21}\cdot X+m_{22}\cdot Y+m_{24}-v\cdot m_{31}\cdot X-v\cdot m_{32}\cdot Y=v\cdot m_{34}\end{cases}.$$

4. The method for recognizing the pedestrian on the crosswalk according to claim 3, wherein in the calibration stage, the test pattern comprises n key feature points, and through calibration, two-dimensional coordinates of each key feature point in the scene in front of the vehicle are obtained as $(X_k, Y_k)$, and pixel coordinates in the image are obtained as $(u_k, v_k)$; where k = 1,2,3,...., n; then:

$$\begin{bmatrix} X_1 & Y_1 & 1 & 0 & 0 & 0 & -u_1 \cdot X_1 & -u_1 \cdot Y_1 \\ 0 & 0 & 0 & X_1 & Y_1 & 1 & -v_1 \cdot X_1 & -v_1 \cdot Y_1 \\ \cdots & \cdots & \cdots & \cdots & \cdots & \cdots & \cdots & \cdots \\ X_n & Y_n & 1 & 0 & 0 & 0 & -u_n \cdot X_n & -u_n \cdot Y_n \\ 0 & 0 & 0 & X_n & Y_n & 1 & -v_n \cdot X_n & -v_n \cdot Y_n \end{bmatrix} \begin{bmatrix} m_{11} \\ m_{12} \\ m_{14} \\ m_{21} \\ m_{22} \\ m_{24} \\ m_{31} \\ m_{32} \end{bmatrix} = \begin{bmatrix} u_1 \cdot m_{34} \\ v_1 \cdot m_{34} \\ \cdots \\ u_n \cdot m_{34} \\ v_n \cdot m_{34} \end{bmatrix}.$$

5. The method for recognizing the pedestrian on the crosswalk according to claim 1, wherein a way of acquisition for the preliminary candidate range of the color block comprises,
expressing a key feature point in the color block by a vector representation method as $(p, \theta)$, and thus expressing the preliminary candidate range as $(p_s, \theta_s)$, where $p_s = [p - \Delta p, p + \Delta p]$, $\theta_s = [\theta - \Delta\theta, \theta + \Delta\theta]$, $\Delta p$ and $\Delta\theta$ are given values of expanded ranges.

6. The method for recognizing the pedestrian on the crosswalk according to claim 1, wherein the screening the sets according to the pixel lengths of all the sets comprises: acquiring a pixel length H of each set, and calculating a mean value $\overline{L}$ of pixel length of all the sets, calculating a pixel length evaluation value H' of all the sets, and retaining a set with a pixel length evaluation value H' greater than its given threshold; where $H' = \dfrac{H}{\overline{L}}$.

7. The method for recognizing the pedestrian on the crosswalk according to claim 1, wherein actual three-dimensional coordinates of an intersection point P of two regression lines in a same coarse judgment group in the scene in front of the vehicle are set as $(\overline{x}, \overline{y}, s)$; in the actual three-dimensional coordinate system, a Z axis is parallel to the optical axis of the front-facing camera, an X axis is horizontal, and a Y axis is vertical; and wherein s is a distance from the front-facing camera to a point where the optical axis of the front-facing camera falls;

regression points on two regression lines A, B in a certain coarse judgment group are let be $A_1(x_1, y_1)$, $A_2(x_2, y_2)$, $B_1(x_3, y_3)$, $B_2(x_4, y_4)$ respectively; t is defined as a coarse judgment coefficient, then:

$$\begin{cases} \overline{x} = \dfrac{1}{t} * [(x_2 - x_1) * (x_4 * y_3 - x_3 * y_4) - (x_4 - x_3) * (x_2 * y_1 - x_1 * y_2)] \\ \overline{y} = \dfrac{1}{t} * [(y_3 - y_4) * (x_2 * y_1 - x_1 * y_2) - (y_1 - y_2) * (x_4 * y_3 - x_3 * y_4)] \end{cases}$$

then:

$$t = (y_2 - y_1) * (x_4 - x_3) - (y_4 - y_3) * (x_2 - x_1)$$

If t is less than its given threshold, it indicates that the regression lines A and B meet the vanishing point coarse judgment requirement.

8. The method for recognizing the pedestrian on the crosswalk according to claim 7, wherein spherical coordinates of an intersection point P of the regression lines are let be $(\alpha, \beta)$, where $\alpha, \beta$ satisfy:

$$\alpha = \arctan\left(\frac{\overline{y}}{\overline{x}}\right)$$

$$\beta = \arctan\left(\frac{s}{\sqrt{\overline{x^2} + \overline{y^2}}}\right)$$

$\delta$ is defined as a fine judgment coefficient, and $\delta$ satisfies:

$$\delta = \arc\cos(\cos(90 - \beta_1)\cos(90 - \beta_2) + \sin(90 - \beta_1)\sin(90 - \beta_2)\cos(\alpha_1 - \alpha_2))$$

where $(\alpha_1, \beta_1)$, $\alpha_2$, $\beta_2$) are spherical coordinates of an intersection point of the regression lines in a fine judgment group to be judged;
if $\delta$ is less than its judgment threshold, the regression lines in the corresponding fine judgment group meet the vanishing point fine judgment requirement.

9.  A vehicle active braking method, **characterized in that** the method uses the method for recognizing the pedestrian on the crosswalk according to any one of claims 1-8 for pedestrian recognization, and when a pedestrian is recognized and a speed of the vehicle is greater than a certain threshold, the vehicle performs an active braking.

10. A system for recognizing a pedestrian on a crosswalk, **characterized in that** the system is used for executing the method for recognizing the pedestrian on the crosswalk according to any one of claims 1-8, the system comprising:

    a front-facing camera used for acquiring a corresponding image of a scene in front of the vehicle; and
    a pedestrian detection module, used for recognizing the pedestrian on the crosswalk in the scene in front of the vehicle according to a calibration result of the front-facing camera and the image obtained by the front-facing camera.

11. A vehicle, **characterized by** comprising the system for recognizing the pedestrian on the crosswalk according to claim 10.

FIG. 1

```
┌─────────────────────────┐
│   Calibrating the front-│
│     facing camera       │
└─────────────────────────┘
            │
            ▼
┌─────────────────────────┐              ┌─────────────────────────┐
│  The front-facing camera│              │  Acquire regression lines of│
│     acquires images     │              │     the screened sets   │
└─────────────────────────┘              └─────────────────────────┘
            │                                          │
            ▼                                          ▼
┌─────────────────────────┐              ┌─────────────────────────┐
│ Acquire key feature points│            │   Performing vanishing  │
│   of color blocks in the│              │ point coarse judgment and│
│        images           │              │     screening on the    │
└─────────────────────────┘              │     regression lines    │
            │                            └─────────────────────────┘
            ▼                                          │
┌─────────────────────────┐                           ▼
│  Expanding the key feature│            ┌─────────────────────────┐
│  points of the color blocks│           │   Performing vanishing  │
│  to obtain the preliminary│            │  point fine judgment and│
│   candidate range of the│              │     screening on the    │
│       color blocks      │              │     regression lines    │
└─────────────────────────┘              └─────────────────────────┘
            │                                          │
            ▼                                          ▼
┌─────────────────────────┐              ┌─────────────────────────┐
│   Forming sets of points│              │  Numbering the regression│
│  with adjacent features in│            │   lines that are screened│
│   the preliminary candidate│           └─────────────────────────┘
│   range of the color blocks│                         │
└─────────────────────────┘                           ▼
            │                            ┌─────────────────────────┐
            ▼                            │  Recognizing pedestrians│
┌─────────────────────────┐             │ according to the variation│
│  Screening the sets based│            │  in the numbering of the│
│     on pixel lengths    │             │     regression lines    │
└─────────────────────────┘             └─────────────────────────┘
```

FIG. 2

FIG. 3

FIG. 4

FIG. 5

## INTERNATIONAL SEARCH REPORT

| International application No. |
| --- |
| **PCT/CN2024/100898** |

| A. | CLASSIFICATION OF SUBJECT MATTER |
| --- | --- |

G06V 20/58(2022.01)i

According to International Patent Classification (IPC) or to both national classification and IPC

| B. | FIELDS SEARCHED |
| --- | --- |

Minimum documentation searched (classification system followed by classification symbols)

IPC:G06V

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 行人, 路人, 消失点, 灭点, 消逝点, 识别, 检测, 判断, passenger, pedestrian, cross, vanishing point, identify+, detect+, vehicle, car

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 104034269 A (SHENZHEN SUNWIN INTELLIGENT CO., LTD.) 10 September 2014 (2014-09-10)<br>description, paragraphs 0017-0070 | 1-11 |
| A | CN 106570906 A (SOUTHEAST UNIVERSITY) 19 April 2017 (2017-04-19)<br>entire document | 1-11 |
| A | CN 109334563 A (JIANGSU UNIVERSITY) 15 February 2019 (2019-02-15)<br>entire document | 1-11 |
| A | CN 110334678 A (HARBIN UNIVERSITY OF SCIENCE AND TECHNOLOGY) 15 October 2019 (2019-10-15)<br>entire document | 1-11 |
| A | CN 114267181 A (SHENZHEN QIYANG SPECIAL EQUIPMENT TECHNOLOGY ENGINEERING CO., LTD.) 01 April 2022 (2022-04-01)<br>entire document | 1-11 |
| A | US 2007274566 A1 (NISSAN MOTOR CO., LTD.) 29 November 2007 (2007-11-29)<br>entire document | 1-11 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **2024-09-13** | **25 September 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 779 592 A1**

**INTERNATIONAL SEARCH REPORT**

| | International application No. |
|---|---|
| | **PCT/CN2024/100898** |

**C.    DOCUMENTS CONSIDERED TO BE RELEVANT**

| Category* | Citation of document, with indication, where appropriate, of the relevant passages | Relevant to claim No. |
|---|---|---|
| PX | CN 117292353 A (DONGFENG MOTOR GROUP CO., LTD.) 26 December 2023 (2023-12-26) claims 1-10, and description, paragraph 0098 | 1-11 |
| A | FAN, Yuhua et al. "A Coarse-to-Fine Framework for Multiple Pedestrian Crossing Detection" *Sensors,* 25 July 2020 (2020-07-25), entire document | 1-11 |

Form PCT/ISA/210 (second sheet) (July 2022)

## INTERNATIONAL SEARCH REPORT
### Information on patent family members

International application No.

**PCT/CN2024/100898**

| Patent document cited in search report | | | Publication date (day/month/year) | Patent family member(s) | | | Publication date (day/month/year) |
|---|---|---|---|---|---|---|---|
| CN | 104034269 | A | 10 September 2014 | None | | | |
| CN | 106570906 | A | 19 April 2017 | None | | | |
| CN | 109334563 | A | 15 February 2019 | None | | | |
| CN | 110334678 | A | 15 October 2019 | None | | | |
| CN | 114267181 | A | 01 April 2022 | None | | | |
| US | 2007274566 | A1 | 29 November 2007 | EP | 1860594 | A2 | 28 November 2007 |
| | | | | EP | 1860594 | A3 | 27 March 2013 |
| | | | | JP | 2007316790 | A | 06 December 2007 |
| | | | | JP | 4797794 | B2 | 19 October 2011 |
| | | | | US | 7667581 | B2 | 23 February 2010 |
| CN | 117292353 | A | 26 December 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311186786